# EUROPEAN PATENT SPECIFICATION

(11) **EP 4 638 940 B1**
(45) Date of publication and mention of the grant of the patent: **04.11.2026**
(21) Application number: 23836936.7
(22) Date of filing: 22.12.2023
(51) Int. Cl.: F03B 13/26

(54) **PASSIVE PITCH SYSTEM**
PASSIVES NEIGUNGSSYSTEM
SYSTÈME DE PAS PASSIF

(30) Priority: 22.12.2022 GB 202219606
(43) Date of publication of application: 29.10.2025
(73) Proprietor: Proteus Marine Renewables Limited, Manchester M3 3AA (GB)
(72) Inventor: BLAXLAND, Drew, 2106AP Heemstede (NL); SARGENT, Nicholas, Gloucestershire GL11 5TD (GB)
(74) Representative: Whitfield, Gillian Janette
(86) International application number: PCT/GB2023/053372
(87) International publication number: WO 2024/134224

(56) References cited:
- EP-A1- 3 045 716
- EP-A1- 3 104 000
- GB-A- 2 010 980
- US-A1- 2021 108 607

## Description

The present invention relates to a passive pitch system for controlling the pitch angle of the blades of a rotor for a tidal turbine.

### BACKGROUND OF THE INVENTION

Conventional tidal turbines have actuator operated 'pitch systems', that control the pitch angle of the blades during power generation. The purpose of such a pitch system is to control the loads on the turbine to within acceptable levels.

The amount of lift or drag generated by a turbine blade is dependent on the flow speed and the angle that flow approaches the blade (i.e. the 'angle of attack' or AoA), so a pitch system can be used to control the blade loading by controlling the blade angle. Since the loading through the turbine is dominated by the rotor loading, the effectiveness of a pitch system can make a big difference to the cost of the tidal turbine.

Most commonly, the pitch system is used to control the turbine power output to a pre-determined level. However, it can also be used to control other loads such as rotor thrust or blade bending moment.

Most pitch systems are controlled 'actively'. Loads that need to be controlled are measured by sensors, and the readings from these are fed into to a control system, where an algorithm is used to calculate the required pitch angle to bring the loads to the desired level. A controller then commands actuators (e.g. motors, hydraulic cylinders) to drive the blades to the required pitch angle. Active pitch systems are operable to control the pitch angle of the blades to control the output power of a turbine. These active systems are very good at controlling mean loads in response to low frequency changes in the mean flow. They are also good at controlling loads due to some local flow transients from waves and large-scale turbulence which are relatively slow to materialise and can be detected and responded to by the control system.

However, they are very poor at responding to short-term local flow transients, which have a very significant effect on the turbine loads. These effects cannot be easily detected in advance and occur so quickly that practically sized systems have insufficient power to pitch the blades quickly enough to significantly mitigate the load fluctuation. Although passive systems exist, they are typically used to limit generator power output during high flow rates to avoid damage to the generator, rather than responding to short-term local flow transients. One such passive system is disclosed in US 2021/108607.

There is therefore a need for an improved system to control turbine blade pitch, particularly in response to short-term local flow transients.

### SUMMARY OF THE INVENTION

The present invention seeks to respond to the problems of the prior art.

Aspects of the present invention are set out in the attached claims.

A first aspect of the present invention provides a passive pitch system for a tidal turbine with a rated power, the passive pitch system comprising:
a rotor having:
   a) a rotor hub for rotatable engagement with a mechanical power transmission system of a tidal turbine and rotatable about a rotor axis, the rotor hub having a blade receiving portion for engagement with a blade;
   b) a blade comprising:
      (i) an elongate blade body having a first end and a second end opposing the first end, a blade inboard portion extending from the first end towards the second end, and a blade outboard portion extending from the second end toward the first end, wherein the elongate body defines a leading edge extending between the first and second ends and a trailing edge extending between the first and second ends and opposing the leading edge; and
      (ii) a blade root portion located at the first end of the blade in fixed engagement with the elongate blade body and configured for rotatable engagement with the rotor blade receiving portion about a pitch axis;
   c) a lever comprising a body having:
      (i) a first engagement portion for fixed engagement with the blade root portion;
      (ii) a second engagement portion opposing the first engagement portion for engagement with a resilient biasing means; and
      (iii) a third engagement portion for engagement with a stop member;
   d) the stop member in fixed engagement with the rotor hub, and
   e) the resilient biasing means having a first end in engagement with the second engagement portion of the lever and a second end opposing the first end, the second end coupled to a position distal to the stop member, the resilient biasing means having a predetermined preload and stiffness selected in dependence upon the rated power of the tidal turbine to which the rotor hub is engaged during use,
wherein, during use, when the hydrodynamic moment acting at the blade about the pitch axis is less than the moment applied to the blade about the pitch axis by the resilient biasing means, the resilient biasing means biases the lever into engagement with the stop member; and when the hydrodynamic moment acting at the blade about the pitch axis exceeds the moment applied to the blade about the pitch axis by the resilient biasing means, the blade is rotatable about the pitch axis to move the lever in a direction away from the stop member.

It is to be understood that the blade inboard portion extending from the first end towards the second end is located proximal to the rotor hub and the blade outboard portion extending from the second end toward the first end is located distal to the rotor hub.

In one embodiment, the second end of the resilient biasing means is in fixed engagement with the rotor hub.

The passive pitch system of the present invention allows a rigid blade to be rotated about its pitch axis during operation, with the pitch angle being controlled by balancing the hydrodynamic loads applied to the blade against the moment applied by the resilient biasing means.

The blade profile is preferably offset with respect to the pitch axis along the length of the blade. The resilient biasing means has a predetermined preload selected in dependence upon the rated power of the tidal turbine to which the rotor hub is engaged during use.

In a further embodiment, the blade inboard portion is offset with respect to the pitch axis in a direction towards the trailing edge, and optionally also away from the pitch axis P in the direction of tidal flow, during use.

The offsetting of the blade inboard portion relative to the pitch axis improves system response rate whilst facilitating balancing of the hydrodynamic pitching moment at the blade against the moment applied by the resilient biasing means within the rotor hub as the turbine moves through its operational flow speed range at rated power i.e. the range of flow speeds through which the turbine will typically generate power.

In addition, or as an alternative to offsetting the blade inboard portion with respect to the pitch axis, the blade outboard portion may be offset with respect to the pitch axis in a direction towards the trailing edge, and optionally also away from the pitch axis P in the direction of tidal flow, during use. This adjusts the sensitivity of the hydrodynamic pitching moment to flow speed at a given pitch angle.

Displacement of the blade outboard portion relative to the pitch axis can improve the response rate for short term transient disruptions in the tidal flow. Therefore, when offsetting of the blade outboard portion is coupled with offsetting of the blade inboard portion with respect to the pitch axis, good power control is provided over the full operational tidal flow speed range as well as improved response rates for short term transient flow disruptions.

In a preferred embodiment, the amount of offset of the blade root portion with respect to the pitch axis is greater than the amount of offset of the blade tip portion with respect to the pitch axis.

Conventionally the location of the pitch axis with respect to the hydrodynamic profiles of the blade are set to minimise the hydrodynamic moments about the pitch axis. However the offsets of the hydrodynamic profiles described above are intended to provide higher hydrodynamic moments about the pitch axis to enable the passive pitch system to operate effectively.

In a further embodiment, the passive pitch system further comprises a tidal turbine controller operable to adjust the speed of rotation of the rotor hub in dependence upon the hydrodynamic moment acting at the rotor about the rotor axis, the speed of rotation of the rotor hub and the predetermined preload of the resilient biasing means, so that the hydrodynamic moment acting at the blade about the pitch axis equals the moment applied to the blade about the pitch axis by the resilient biasing at a pitch angle corresponding to rated power of the tidal turbine.

In a further embodiment, the passive pitch system further comprises a preload adjustment member in fixed engagement with the second end of the resilient biasing means, the preload adjustment member being moveable relative to the rotor hub and rotatable with the rotor hub, wherein the preload of the resilient biasing means can be adjusted by moving the preload adjustment member relative to the rotor lever to alter the distance between the second engagement portion of the lever and the second end of the resilient biasing means.

Preferably, moving the preload adjustment member in a direction away from the lever to increase the distance between the lever and second end of the resilient biasing means decreases the preload of the resilient biasing means; and moving the preload adjustment member in a direction towards the lever to decrease the distance between the lever and the second end of the resilient biasing means increases the preload of the resilient biasing means.

The passive pitch system may further comprise a wheel gear located in fixed engagement with the blade root portion, wherein the wheel gear is operable to control rotation of the blade about the pitch axis independently of the hydrodynamic moment acting at the blade about the pitch axis.

In one embodiment, the passive pitch system further comprises an adjustment plate in fixed engagement with the stop member and second end of the resilient biasing means, wherein the adjustment plate is operable to control rotation of the blade about the pitch axis independently of the hydrodynamic moment acting at the blade about the pitch axis.

### DESCRIPTION OF THE DRAWINGS

Figures 1A and 1B illustrate a rotor for a tidal turbine;
Figure 1C is a perspective view of a blade for a tidal turbine; Figure 1D is a view from one end of the blade of figure 1C and figure 1E is a view from the opposing end of the blade of figure 1C;
Figures 2A and 2B show the blade and lever arrangement of a first embodiment of a rotor of a passive pitch system in accordance with the present invention; Figure 2C shows the arrangement of figures 2A and 2B located within the rotor hub; Figures 2C and 2E shows a rotor hub engaged with a plurality of blade and lever arrangements as shown in figures 2A and 2B; and figures 2D and 2F are the views of figures 2C and 2E with the rotor hub omitted for clarity;
Figures 3A, 3B and 3C show snap shots of a range of blade equilibrium positions as the blade moves to or close to the desired pitch angle as the flow speed increases;
Figure 4 shows a graph showing the change in pitch angle β as the flow speed increases;
Figure 5 is a graph showing the relationship between flow speed, pitch angle and turbine power;
Figure 6 shows a graph representing the typical total hydrodynamic moment at the blade 16 for a 3MW, 24m rotor, rotating at 14.3rpm, observed at different pitch angles β;
Figure 7 shows a conventional blade for an active pitch system;
Figures 8A and 8B show a blade with altered geometry;

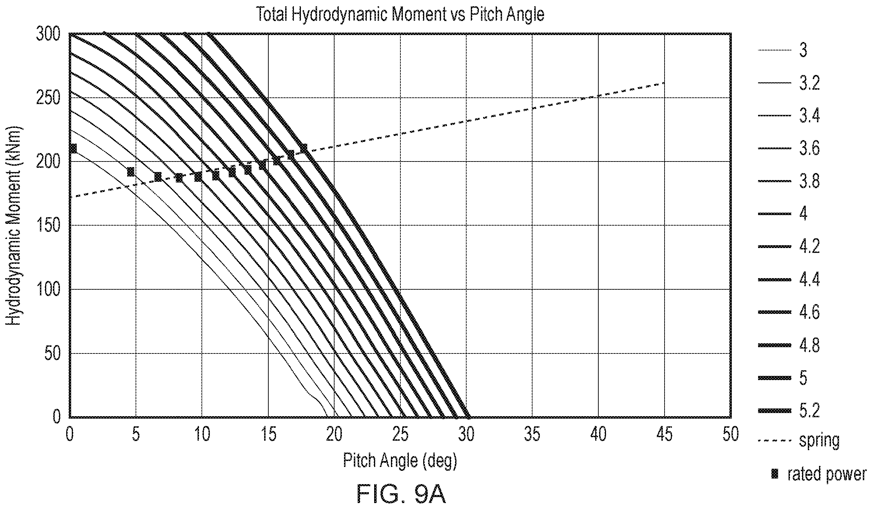

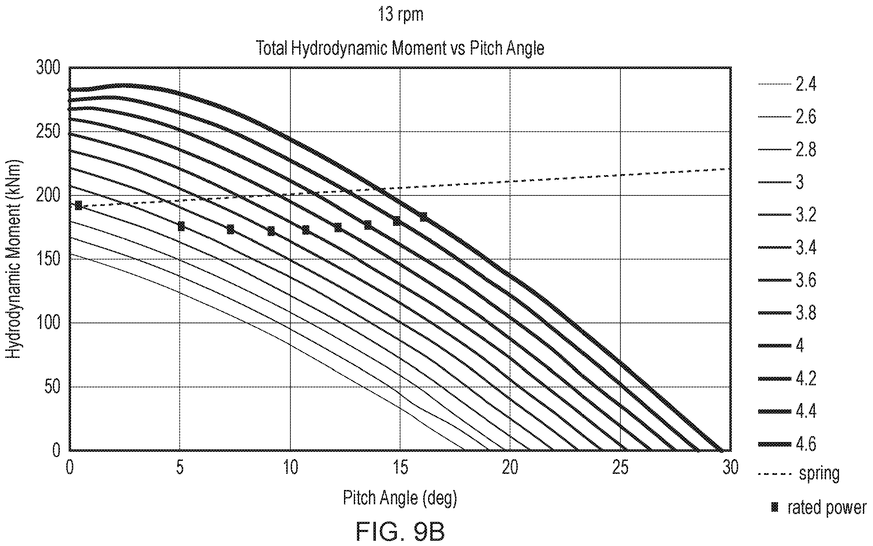

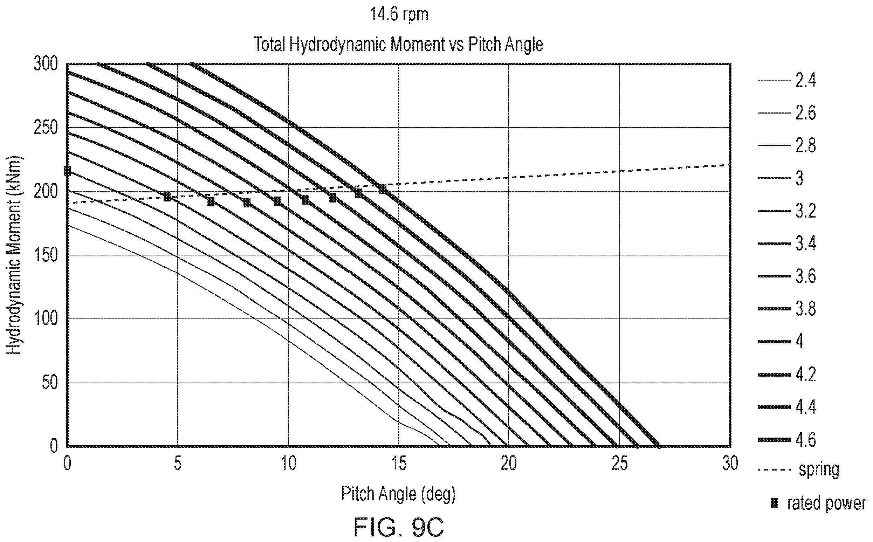

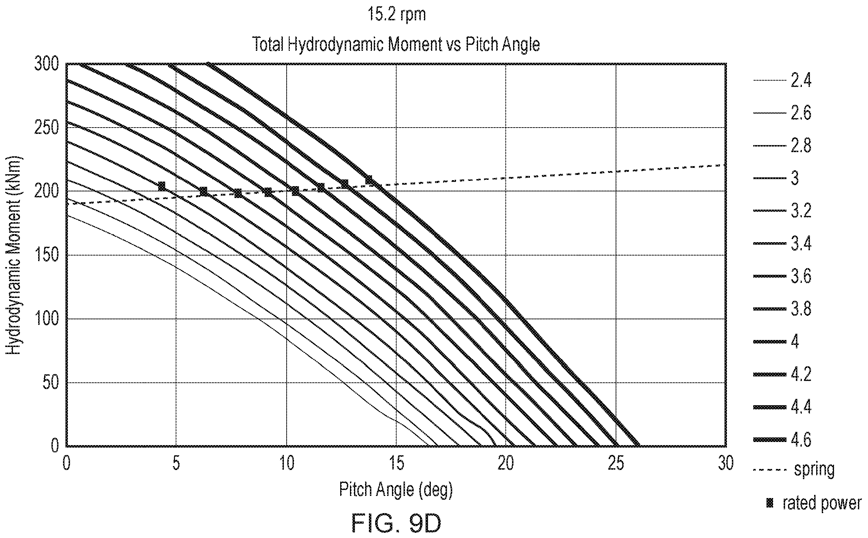

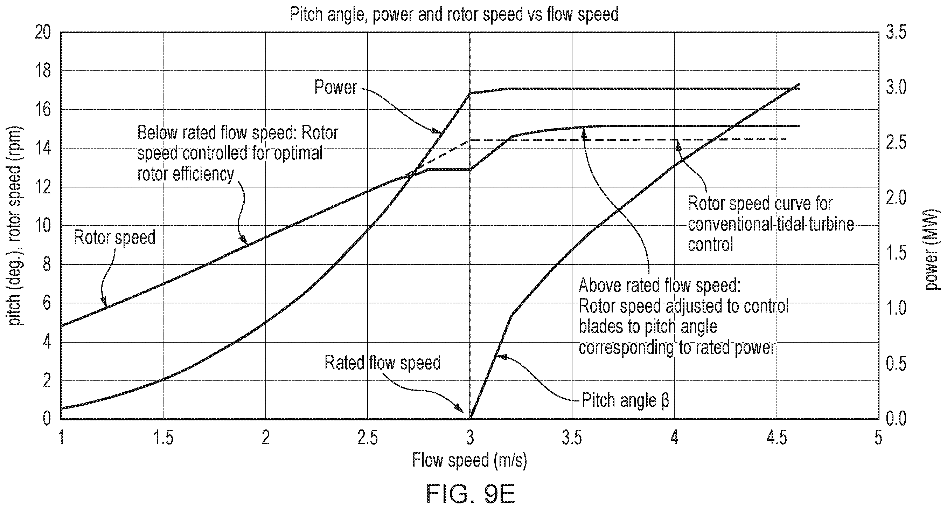

Figure 9A is a graph showing the total hydrodynamic moment versus pitch angle when the blade inboard portion is offset relative to the pitch axis; Figure 9B, 9C and 9D are graphs showing the blades hydrodynamic moments about the pitch axis for a range of flow speeds and pitch angles for a specific spring stiffness and preload (Fig 9B is for a rotor velocity of 13 rpm, figure 9C for a rotor velocity of 14.6 rpm and figure 9D, for a rotor velocity of 15.2rpm), Figure 9E is a graph illustrating that the rotor speed is set by the turbine controller to produce the required pitch angle β for rated power for the specific preload and stiffness of the spring.
Figure 10 shows blades with altered geometries;
Figure 11 is a graph showing hydrodynamic moment at the blade 16 for a 3MW, 24m rotor, rotating at 14.3rpm, observed at different pitch angles β, and showing the spring moment at a variety of preload settings;
Figures 12A to C show an embodiment of an arrangement to achieve spring preload adjustment in accordance with the present invention; and
Figures 13A to D show an embodiment of an arrangement to achieve feathering of the blades using a wheel gear in fixed engagement relative to the blade.
Figures 14A to D show a further embodiment of an arrangement to achieve feathering of the blades using an adjustment plate in fixed engagement with the lever and rotatable with the lever about the pitch axis P: figure 14A shows the lever in a first position; figure 14B shows the lever rotated relative to figure 14A; Figure 14D shows a rotor hub engaged with a plurality of the blades of figure 14A; and 14C shows the arrangement of figure 14D with the rotor hum omitted for the purposes of clarity.

### DETAILED DESCRIPTION OF THE PREFERRED EMBODIMENTS

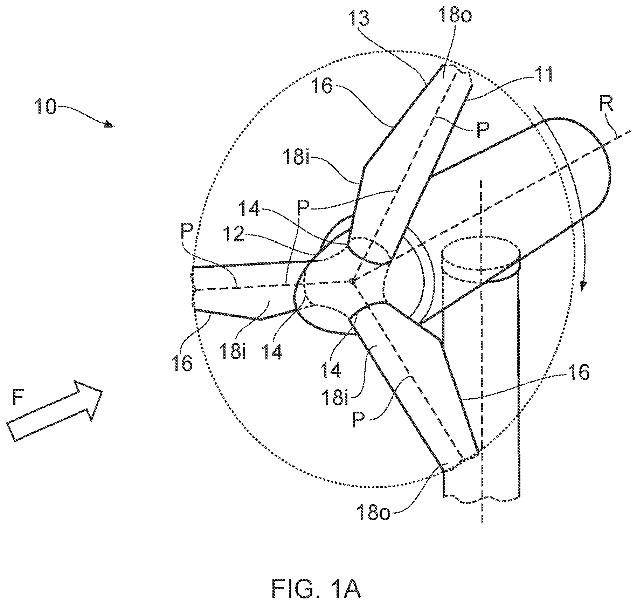

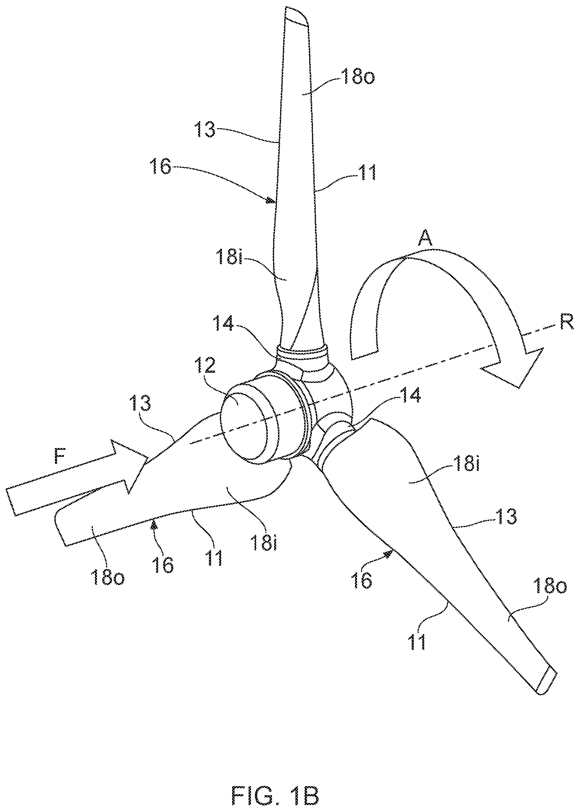

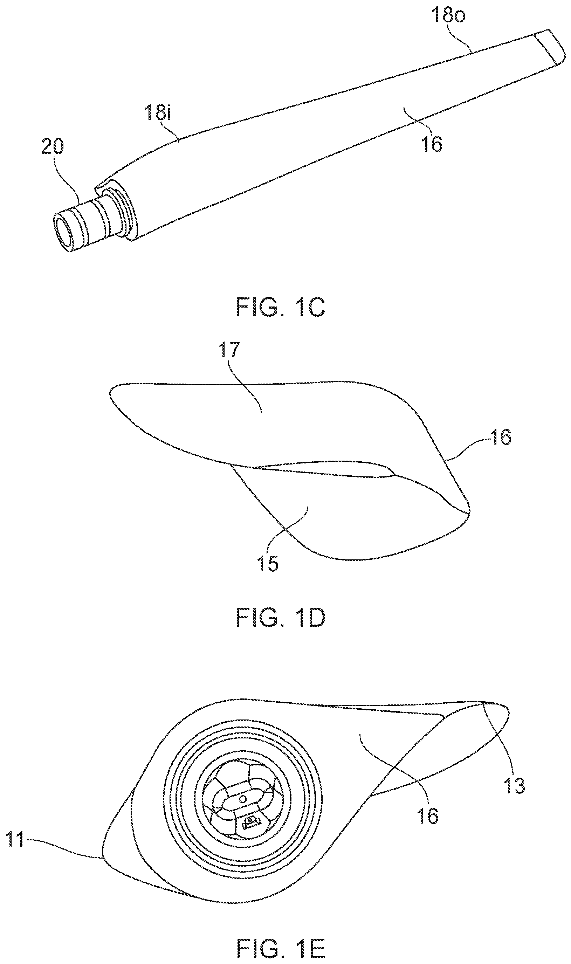

Figures 1A and 1B show a rotor 10 for a tidal turbine. The rotor 10 comprises a rotor hub 12 with a plurality of blade engagement portions 14, each of which is engaged with a respective blade 16. The direction of flow of water is shown by arrow F. The hydrodynamic forces from the water flowing past the blades 16 causes a moment about the rotor axis R, thereby causing the rotor to rotate about rotor axis R. This kinetic energy is converted to electrical energy by an electrical generator with which the rotor 10 is engaged.

Each blade 16 has an inboard portion 18i extending from the end of the blade 16 adjacent the rotor hub 12, and an outboard portion 18o extending from the opposing end of the blade 16 that is distal to the rotor hub 12.

Each blade 16 has a blade root 20 at the inboard portion 18i (see figure 1C). The blade root 20 of each blade 16 is engaged with a respective blade engagement portion 14 and the blade 16 can be rotated relative to the rotor blade hub 12 about a pitch axis P.

The blade also has a leading edge 11 and a trailing edge 13 which extend along the longitudinal length of the blade. Further each blade has two faces, a pressure face 15 on one side of the blade 16, and a suction face 17 on the opposing side to the pressure face 15. The pressure face 15 and suction face 17 meet at the leading and trailing edges 11, 13 (see figure 1 E).

The relative rotation of each blade 16 with the rotor hub 12 is typically achieved by locating bearings between each rotor blade engagement portion 14 and respective blade root 20.

Figure 1A and 1B also illustrates the orientation of the rotor hub 12 relative to the direction of tidal flow F and the leading and trailing edges 11, 13 of each blade 16. In use, the hydrodynamic forces from the water flow (shown by arrow F) past the blades 16 causes a moment about the rotor axis (shown by arrow A in figure 1A), causing the rotor hub 12 to rotate. These moments are reacted by an electrical generator to convert the mechanical energy generated at the rotor hub 12 into electrical energy.

It is important that the amount of power and loads being applied to the turbine are controlled in order to avoid overloading the turbine subsystems including, but not limited to, generators, gearboxes and electrical cables. This is achieved by rotating the blades 16 about the pitch axis P to control the orientation of the blades 16 relative to the direction of flow F.

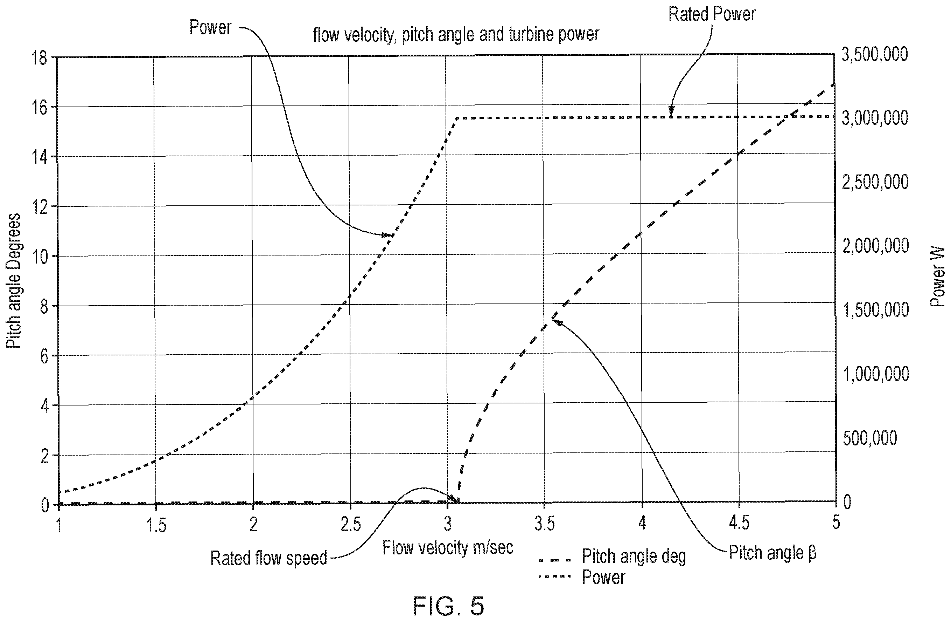

As shown in figure 5, at flow speeds below rated flow speed, the turbine will have its blades set to what is known as pitch angle, β = zero, so that the blades will capture the maximum amount of energy from the flow.

Once the flow exceeds the rated flow speed i.e. the flow speed at which the turbine is operating at rated power whilst the blade pitch angle, β = zero, the pitch angle of the blades 16 must be increased to limit the power being generated to that of the rated power of the turbine. The higher the flow speed, the greater the pitch angle required to limit the power to rated power.

In active pitch control systems, the orientation of the blades 16 relative to the rotor hub 12 is controlled by an actuation system which sets the blade position in dependence upon the flow speed and the rated power of the turbine. Such actuation systems involve the use of electrical actuators and mechanisms such as hydraulic rams, levers, motors, sensors and gearboxes, all of which are expensive to install, complicated to maintain, and provide multiple potential failure points.

However, flow speed through the rotor area is not a constant and varies in dependence upon the tidal sequences, the wave dynamics, turbulence, water depth and influences from the turbine operation and its mounting structure within the local environment.

Conventionally, an active pitch control system will respond to these variations in order to smooth out the power produced by the turbine. However, in practice, active control systems are slow to respond to flow fluctuations, which can result in the turbine operating at greater than rated power for short periods of time, thus requiring a greater capacity and therefore having a higher production cost.

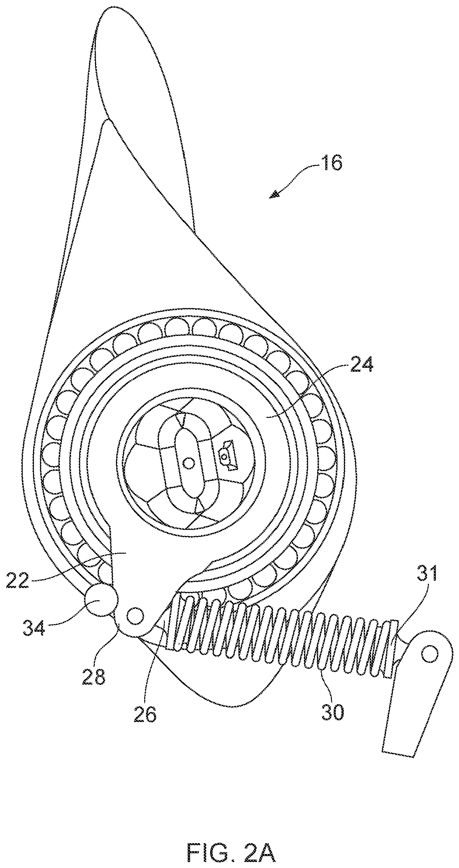

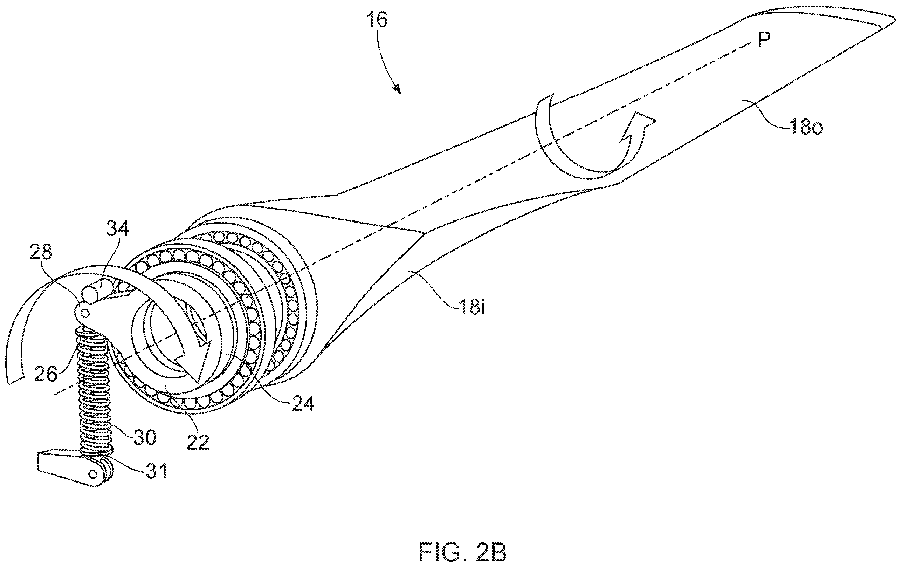

Figures 2A and 2B show the blade and lever arrangement of a first embodiment of a rotor of a passive pitch system in accordance with the present invention.

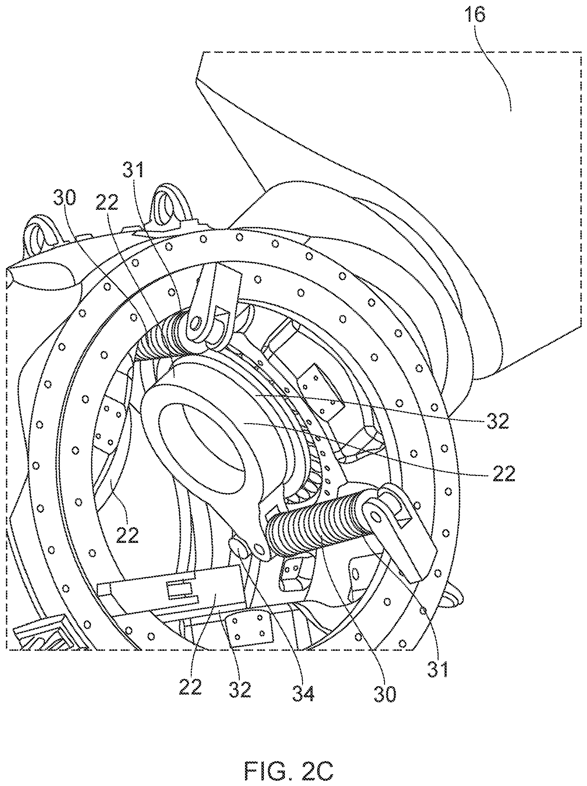

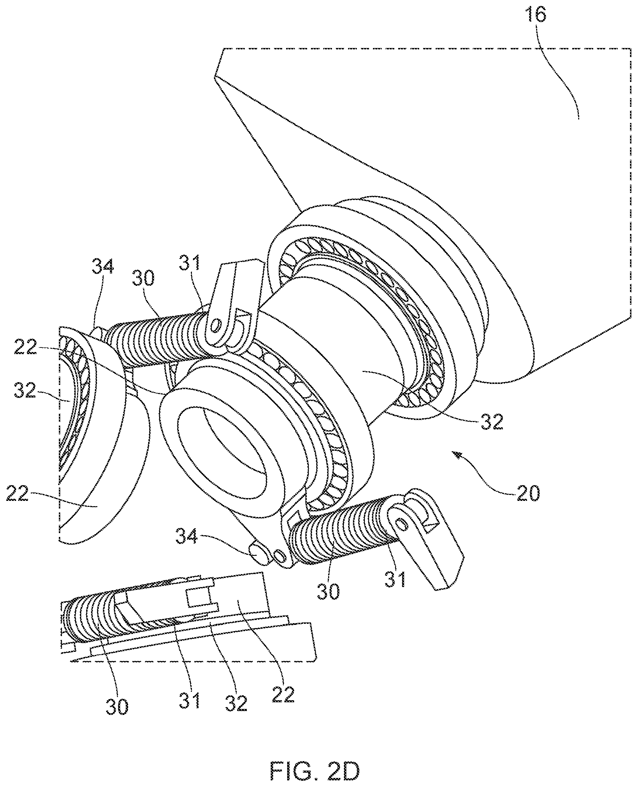

Figures 2C and 2D show the blade and lever arrangement of figures 2A and 2B in engagement with the rotor hub 12. Blade 16 is held in position relative to the rotor hub 12 by bearings that are fixed to the blade engagement portions 14 of the rotor hub 12 and which allow the blade 16 to rotate about pitch axis P to change the orientation of the blade 16 relative to the direction of water flow. The rotor hub 12 is fixed to a shaft (not shown) that supports it and drives a gearbox and generator to convert kinetic energy generated at the rotor 10 to electrical energy.

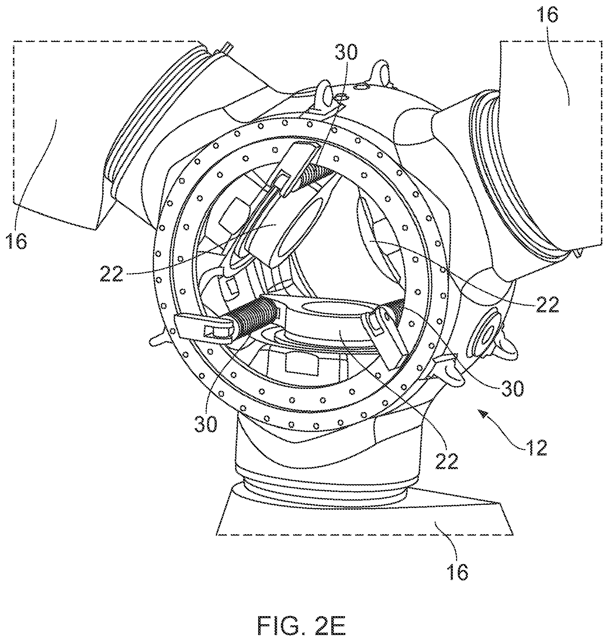

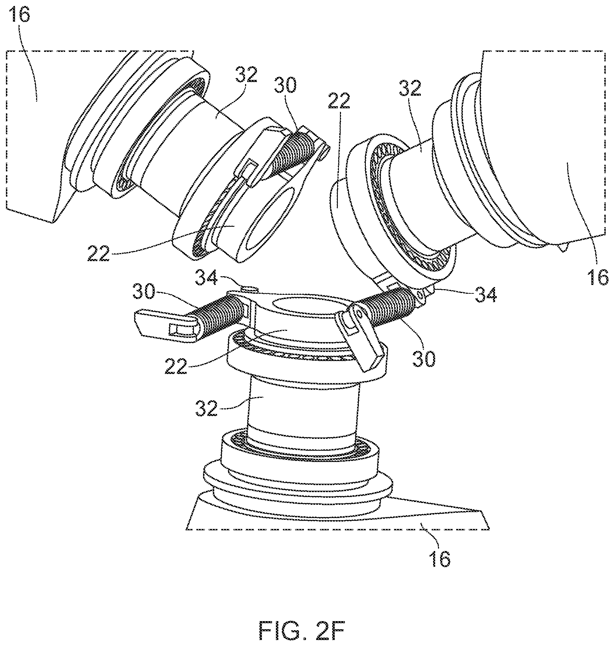

Figure 2E shows the rotor hub 12 with multiple blades 16 engaged with respective blade engagement portions 14 of the rotor hub 12, each defining a separate pitch axis P. The lever 22 is engaged with each blade 16 such that movement of the blade about the pitch axis P results in movement of the lever 22 relative to the rotor hub 12. Figure 2F shows the positions of the blades 16 of figure 2E with the rotor hub omitted to further clarify the positions of the blades 16 and levers 22 within the rotor 10.

For the purposes of clarity, the following description relates to one of the blades 16 in engagement with the rotor hub 12, but it is to be appreciated that it is applicable to each blade 16.

The blade and lever arrangement includes a blade 16, a lever 22 and a resilient biasing means 30. In the embodiment shown the lever 22 is attached to the blade root portion via a pintle shaft 32. In the embodiment shown, the resilient biasing means 30 is a coil spring. However, it is to be appreciated that any other suitable resilient biasing means may be used in addition to, as an alternative to the coil spring including, but not limited to a leaf spring, a torsional spring, a hydraulic ram with accumulator, or a pneumatic ram with accumulator.

Lever 22 has a first engagement portion 24 for fixed engagement with the blade root portion 20; a second engagement portion 26 opposing the first engagement portion for engagement with spring 30; and a third engagement portion 28 for engagement with a stop member 34. Stop member 34 is in fixed engagement with the rotor hub 12. The location of the stop member 34 on rotor hub 12 and the location of the fixed end 31 of the spring 30 are selected such that the spring 30 has a preloaded force in it to push the lever 22 against stop member 34.

Thus, as tidal flow F passes over the hydrodynamic control faces of the blade 16 i.e. pressure face 15 and suction face 17, the flow F applies a pressure distribution that results in a net moment about the pitch axis P. In addition, the spring 30 applies a moment to the blade 16 about the pitch axis P.

When the flow speed is zero, all the force from spring 30 is reacted by the stop member 34 and the blade 16 will be at zero pitch angle i.e. the resting state where the blade orientation is fully determined by the preload of the spring 30.

In an ideal system, once the speed of the flow F reached the rated speed i.e. the flow speed at which the turbine is operating at rated power, the hydrodynamic moment at the blade 16 equals the moment produced by the preload of the spring 30 and is in the opposite direction to that moment (see figure 2B).

When the flow speed is greater than the rated flow speed, the hydrodynamic moment at the blade 16 is greater than the preload of the spring 30, which causes the lever 22 and blade 16 to rotate relative to the rotor hub 12 about the pitch axis P, thus changing the orientation of the blade 16. This rotation increases the moment applied by the spring 30 and changes the hydrodynamic moment at the blade 16 so that a new equilibrium position is reached. The rotation is expressed as an angle relative to the orientation of the blade 16 at zero pitch angle.

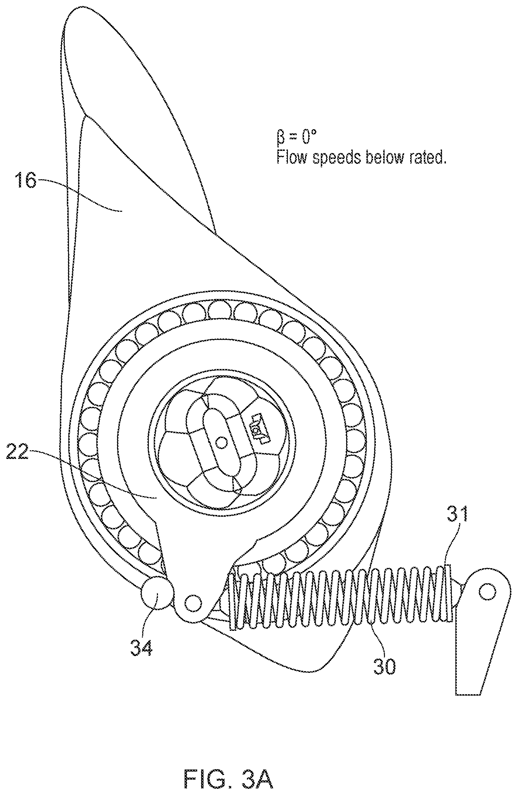

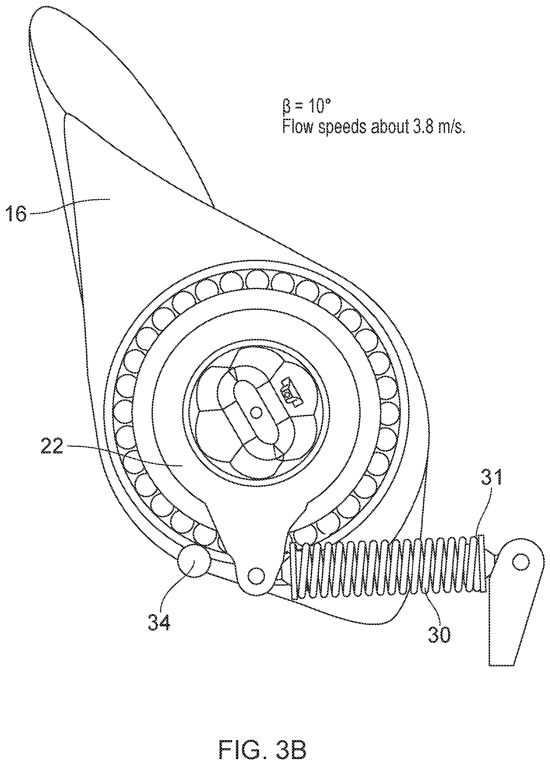

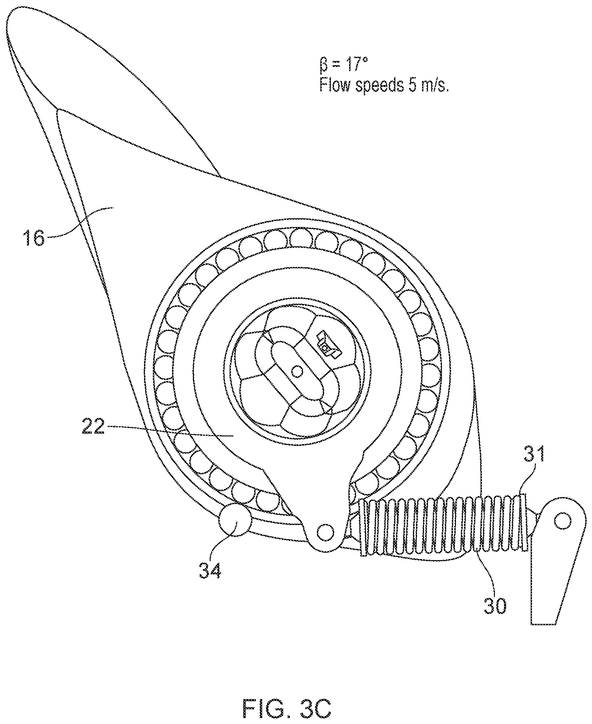

Figures 3A, 3B and 3C show snap shots of a range of blade equilibrium positions as the blade moves to or close to the desired pitch angle β as the flow speed increases. Figure 3A shows the equilibrium position when the pitch angle β equals zero - this occurs at flow speeds below the rated flow speed i.e. when the hydrodynamic moment at the blade 16 is less than the moment produced by the preload of the spring 30. Figure 3B shows the equilibrium position when the pitch angle β is around 10° from zero pitch angle - this occurs when the flow speed rises above the rated power of the turbine. And figure 3C shows the equilibrium position when the flow speed rises further, the hydrodynamic moment at the blade 16 further increases, and the lever and blade rotate further about the pitch axis P to increase the pitch angle β.

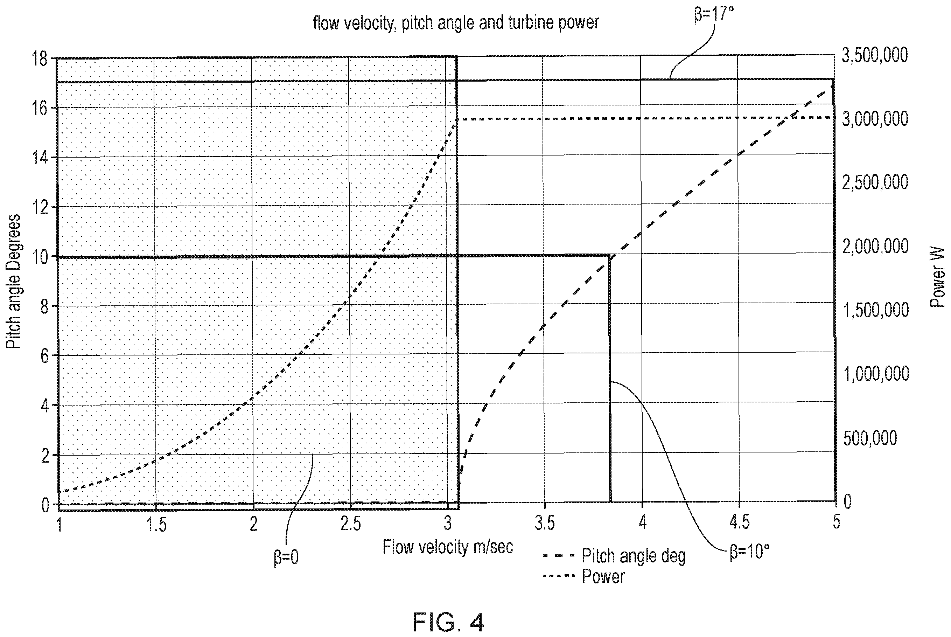

The graph of figure 4 shows the change in pitch angle β as the flow speed increases, with the boxed area indicating when β is zero (i.e. figure 3A), with the snapshot equilibrium positions of figures 3B and 3C marked accordingly.

These observations were made using a 3MW rated turbine with a 24m rotor.

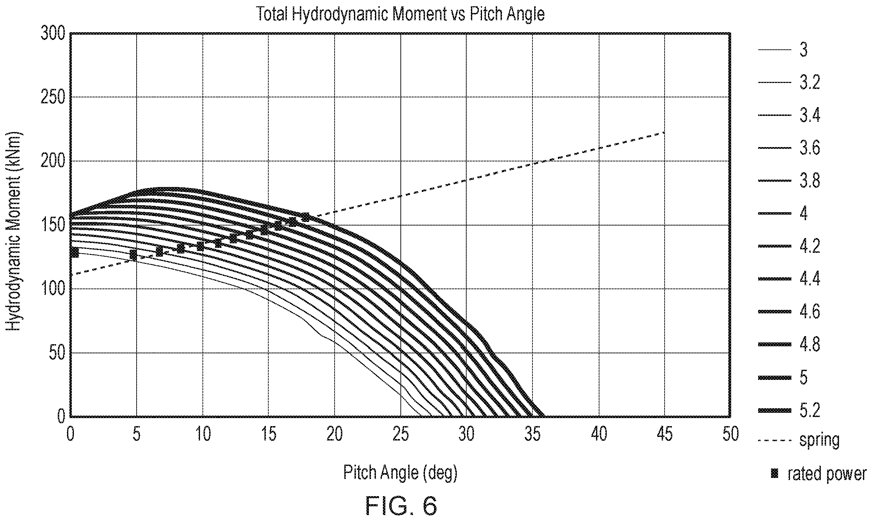

Figure 6 shows a graph representing how total hydrodynamic moment at the blade 16 may vary with pitch angle β for a typical tidal turbine blade 16. The separate lines show how the hydrodynamic pitching moment varies with pitch angle β for different flow speeds. The markers plotted on each line show the pitch angle β and hydrodynamic pitching moment when the turbine is producing rated power at the given flow speed. The figure shows that a resilient biasing means 30 with a linear load to displacement relationship can provide a relatively good fit to these markers, meaning that the passive pitch system of the present invention provides a relatively close match to the desired performance over the range of flow speeds. However, the match is not perfect, and when using the lever 22 and spring 30 arrangement described above, it was observed that the hydrodynamic moment at the blade 16 is greater than the moment applied by the spring 30 at low flow speeds. This results in the blade 16 starting to pitch i.e. rotate about the pitch axis P at lower than the rated power of the turbine, with the resultant small loss of power at flow speeds close to the rated flow speed. This has the undesirable effect of reducing the energy or yield that the system produces.

Note also on Figure 6, as the flow speed increases, there is a relatively small increase in hydrodynamic pitching moment. This leads to a relatively small rotational acceleration of the blade 16 about the pitch axis P, which means the blade 16 responds to changes in the flow relatively slowly. A faster response is more desirable as it reduces load and power fluctuations of the turbine.

It is to be noted that Figure 6 is for a 3MW, 24m diameter rotor, operating at 14.3rpm, but the key characteristics are scalable, and similar graphs are obtainable for turbines with different sizes and ratings.

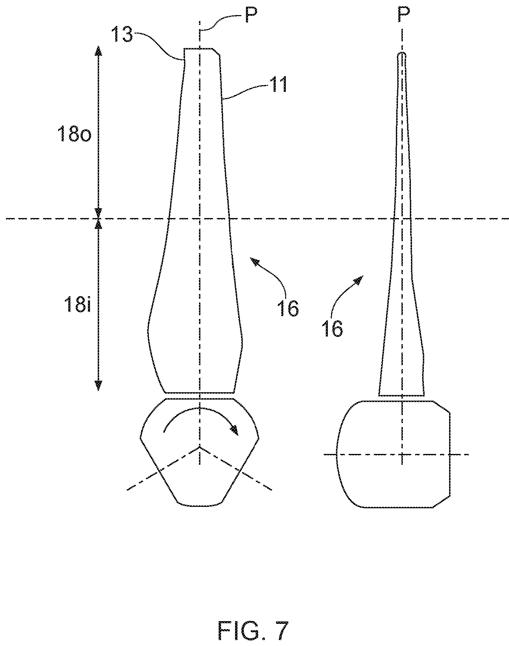

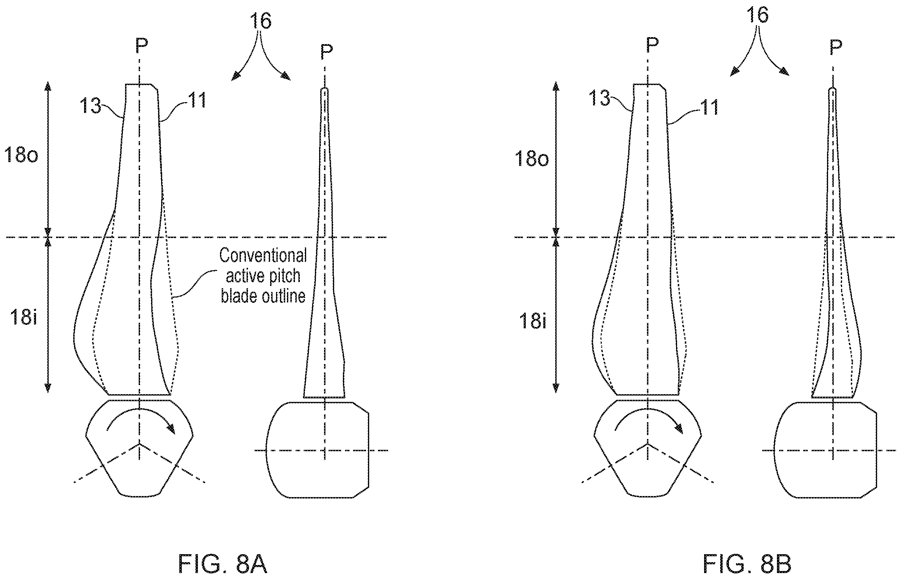

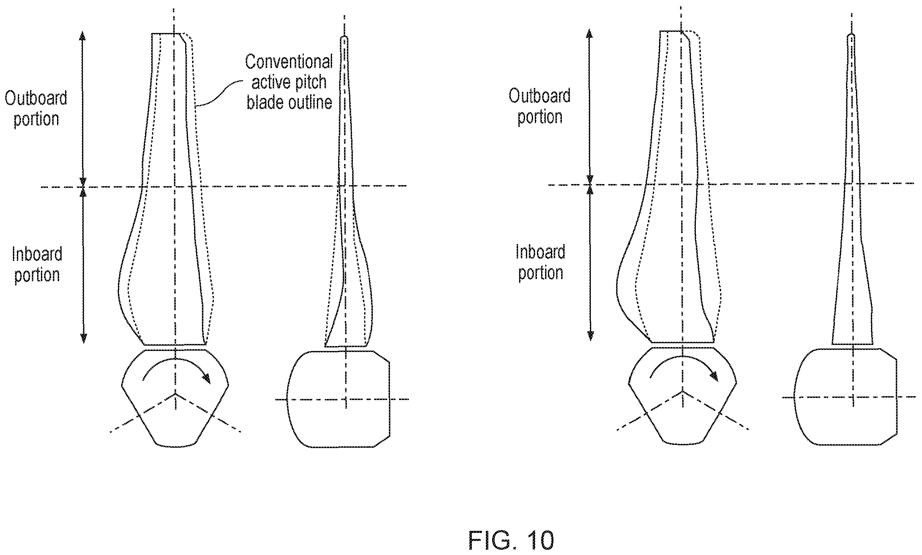

One way to improve the system response speed is to alter the blade geometry. By displacing different portions of the blade 16, or the full blade 16 away from the pitch axis P, the system response rate to changes in flow can be increased. Figure 7 shows a conventional blade 16 for an active pitch system. By comparison, figures 8A and 8B show a blade 16 with altered geometry. Figure 8A shows an altered blade geometry where the hydrodynamic profile along the inboard portion 18i of the blade 16 is offset towards the trailing edge 13. Further, Figure 8B shows an altered blade geometry where the hydrodynamic profile along the inboard portion 18i of the blade 16 is offset towards the trailing edge 13 and away from the pitch axis P in the direction of flow F. A further modification of the blade 16 geometry is shown in figure 10 in which the outboard portion 18o of the blade 16 is modified by offsetting towards the trailing edge.

These displacements result in increased hydrodynamic moments at the blade 16 as the flow speed increases, thus the blade 16 rotates more rapidly about the pitch axis P. This is illustrated in the graph of figure 9A. It is to be noted how the difference between hydrodynamic pitching moment at relevant pitch angles β is significantly larger for a given difference in flow speed than in Figure 6.

It is to be noted that Figure 9A is for a 3MW, 24m diameter rotor, operating at 14.3rpm, but the key characteristics are scalable, and similar graphs are obtainable for turbines with different sizes and ratings.

Displacement of the inboard section 18i of the blade 16 gives a slight increase in response rate, whilst maintaining relatively accurate power control if a constant stiffness spring 30 is used. Displacement of the outboard portion 18o of the blade 16 gives a greater increase in response rate with the penalty of reducing the accuracy of power control if a constant stiffness spring 30 is used.

### Speed control

To avoid the loss of yield due to the limitations of a constant stiffness spring 30, the rotor velocity can be adjusted to change the hydrodynamic moment applied to the blade 16 about the pitch axis P. An increase in rotor velocity increases the moment and a decrease in rotor velocity decreases the moment in the normal operating ranges of the turbine.

Fig 9A shows the characteristics of hydrodynamic moment about the pitch axis P for a constant speed of rotation of the rotor at 14.3 rpm. The markers show the pitch angle β on each flow speed that produces the turbines rated power. It's clear that at speeds greater than 3.4 m/s a spring 30 with a constant stiffness controls the turbine to rated power accurately.

However, it is also clear that at zero pitch angle (β=0) the hydrodynamic moment at rated power is much higher than the moment from the spring 30. Therefore, the hydrodynamic moment applied to the blade 16 about the pitch axis P would have been greater than the spring moment at a lower flow velocity, and the blade 16 would have pitched away from a zero-pitch angle. This would result in the turbine operating at lower power until the flow has reached about 3.4m/sec, and an associated loss of yield.

However, if the rotor speed is reduced then the hydrodynamic moment applied to the blade 16 about the pitch axis P is also reduced.

As an example, figures 9B, 9C and 9D show the blades hydrodynamic moments about the pitch axis P for a range of flow speeds and pitch angles for a specific spring stiffness and preload. Fig 9B is for a rotor velocity of 13 rpm, figure 9C for a rotor velocity of 14.6 rpm and figure 9D, for a rotor velocity of 15.2rpm.

It is to be noted that Figures 9B, 9C and 9D is for a 3MW, 24m diameter rotor but the key characteristics are scalable, and similar graphs are obtainable for turbines with different sizes and ratings.

At flow speeds approaching 3 m/sec the rotational velocity of the rotor will be 13 rpm. When the flow speed increases from 3m/sec the rotor speed will gradually increase so that the hydrodynamic moment applied to the blade 16 about the pitch axis P matches the moment applied by the spring 30 at the pitch angle β that produces the rated power. This is 14.6 rpm at 3.2 m/sec and 15.2 at 3.4m/sec and above.

In this example the rotor speed is set by the turbine controller to produce the required pitch angle β for rated power for the specific preload and stiffness of the spring 30, this is shown graphically in figure 9E.

The turbine controller does not directly measure the passing flow speed. The turbine monitors converted power and rotor rotational speed and uses this data to calculate the required rotor speed to ensure that the hydrodynamic moment applied to the blades 16 about the pitch axis P matches the moment applied by the spring 30 at the required pitch angle β for rated power.

### Spring Preload Adjustment

A further means of avoiding the loss of yield due to the limitations of a constant stiffness spring is to control the preload of the spring 30. Gradual adjustment of the preload of the spring 30 can be made in response to the flow speed, thereby modifying the moment applied by the spring 30.

Adjustment of the preload of the spring 30 is carried out by an actuation system controlled by the turbine controller, and can be done instead of, or in addition to, controlling the speed of the rotor 10 as described above.

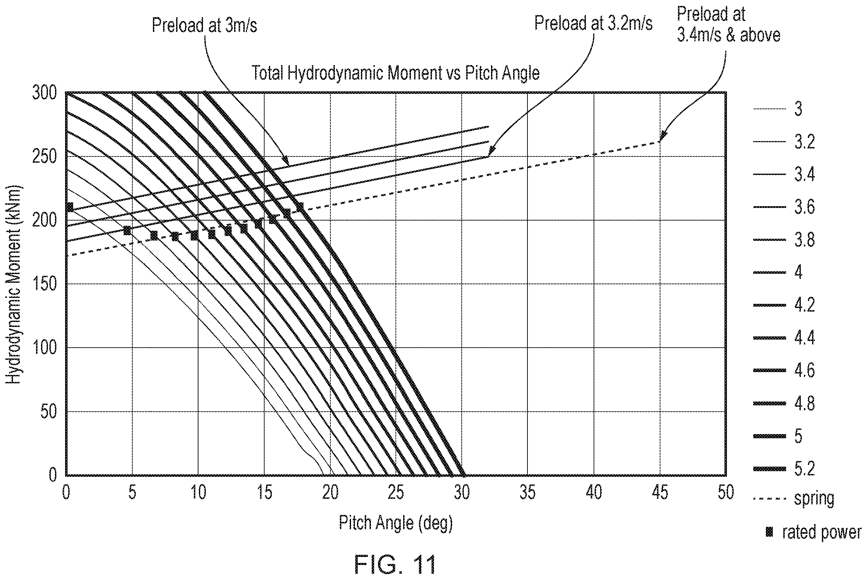

Figure 11 shows the spring moment at a variety of preload settings. The preload would be set such that the hydrodynamic moment matches the spring moment at the pitch angle corresponding to rated power. The preload setting is calculated depending on the measured power level and blade pitch angle.

It is to be noted that Figure 11 is for a 3MW, 24m diameter rotor, operating at 14.3rpm, but the key characteristics are scalable, and similar graphs are obtainable for turbines with different sizes and ratings.

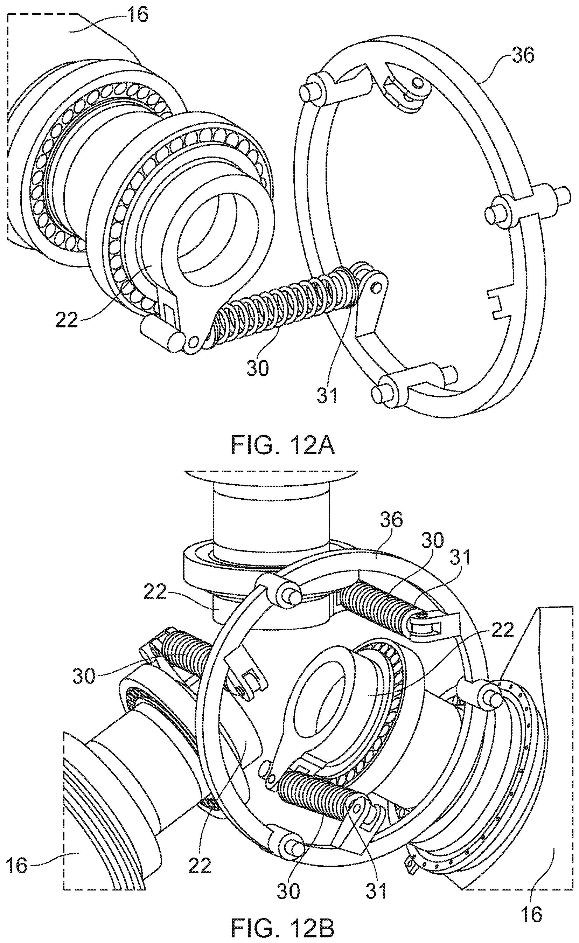

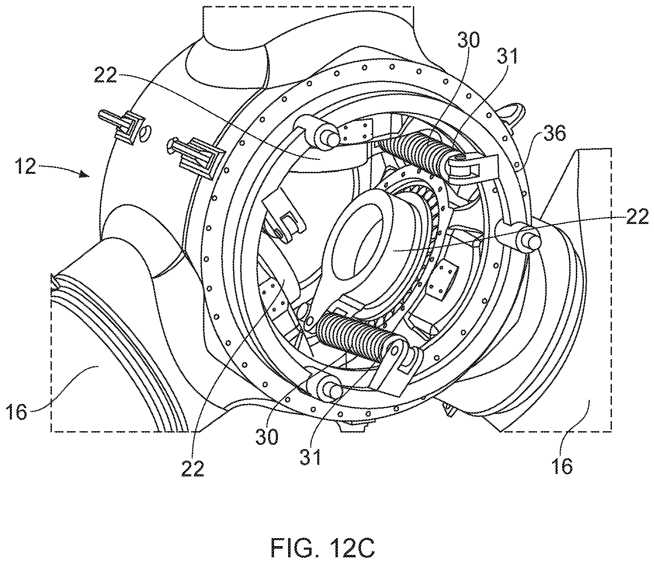

An embodiment of an arrangement to achieve spring preload adjustment is show in figures 12A to C. Figure 12A shows a single blade 16 with lever 22 and spring 30 arrangement as previously described. A preload adjustment member, in this case a preload adjustment ring 36 is provided in fixed engagement with the end of the fixed end of the spring 31 distal to the lever (see figure 12B). This preload adjustment ring 36 is in movable engagement relative to the rotor hub 12 such that moving of the preload adjustment ring 36 relative to the hub changes the relative angle of the lever 22 and blade 16, thereby adjusting the distance between the lever 22 and the preload adjustment ring 36, resulting in modification of the preload of the spring 30. Figure 12C shows the arrangement of figure 12B in place with the rotor hub 12.

Although the embodiment uses a preload adjustment ring 36, it is to be appreciated that the preload adjustment member need not be a ring, and that any suitable component capable of achieving the same function may be used as an alternative.

It is to be appreciate that any suitable means of moving the preload adjustment member relative to the blade 16 may be used provided it modifies the distance between the end of spring 30 fixed to the preload adjustment ring 36 and the lever 22.

### Feathering of the blades

Feathering of the blades is when the blade 16 is rotated about the pitch axis P to turn the blades to circa β=90 degrees to reduce the rotor torque to zero. This is done to stop the rotation of the rotor 10, for example, as an emergency measure under situation of excess flow speed or when bringing the system to rest.

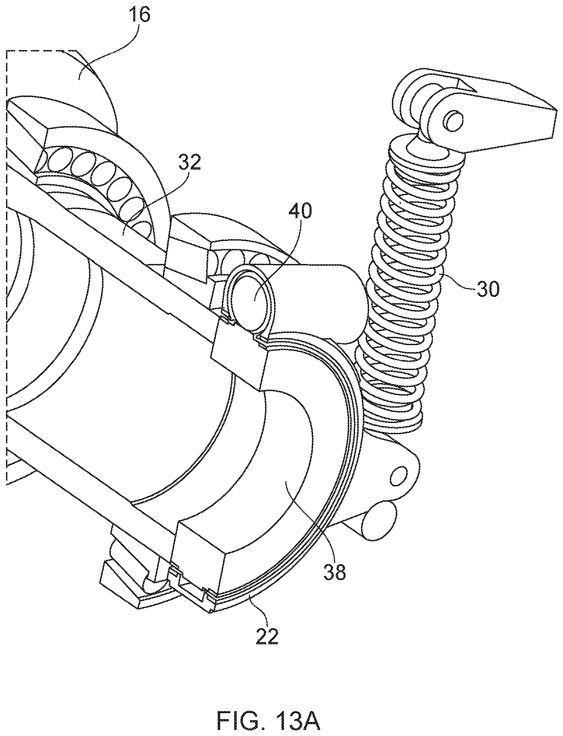

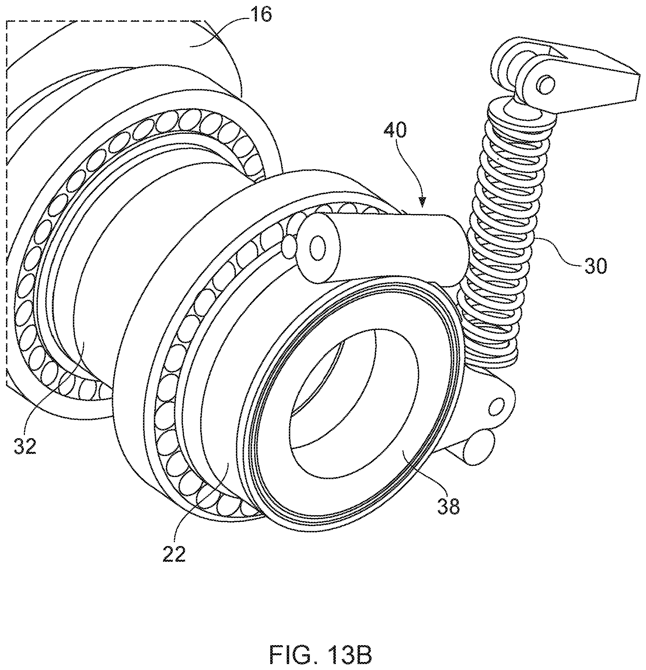

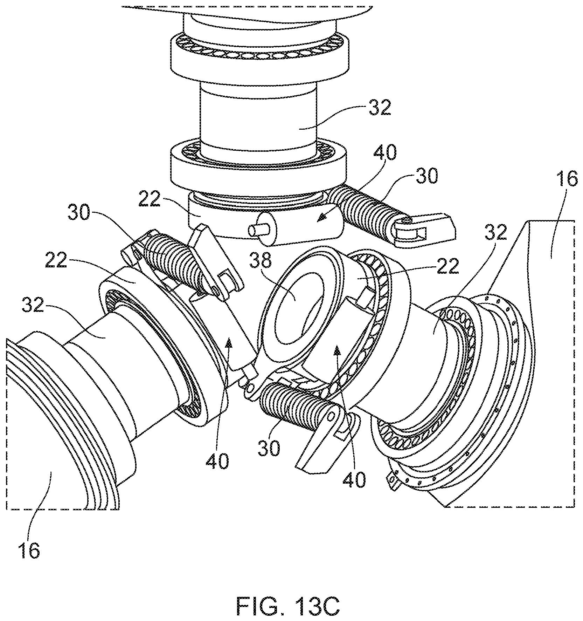

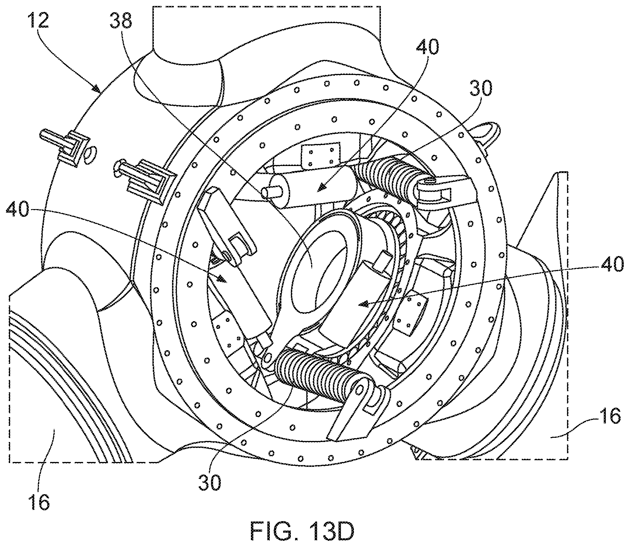

One example of how this can be achieved using the passive pitch system of the present invention is shown in figures 13A to 13D using a wheel gear 38 in fixed engagement relative to the blade 16. In the example shown in figures 13A to 13D, a wheel gear 38 is in fixed engagement with the pintle shaft 32 of the blade 16. A worm 40 is located within lever 22 and a motor (not shown) is engaged with the worm 40. Thus, in normal operation, the passive pitch system works as previously described.

However, when adjustment of the pitch angle β is required, for example when feathering of the blades is desired, the motor can be actuated to rotate the worm 40 to drive the wheel gear 38 with respect to the lever 22, thereby changing the pitch angle β of the blade 16 without moving the lever 22.

Thus, 90° rotation of the blade about the pitch axis P can be produced, thereby setting the blade to feather without moving the lever 22 of the fixed end of the spring 30.

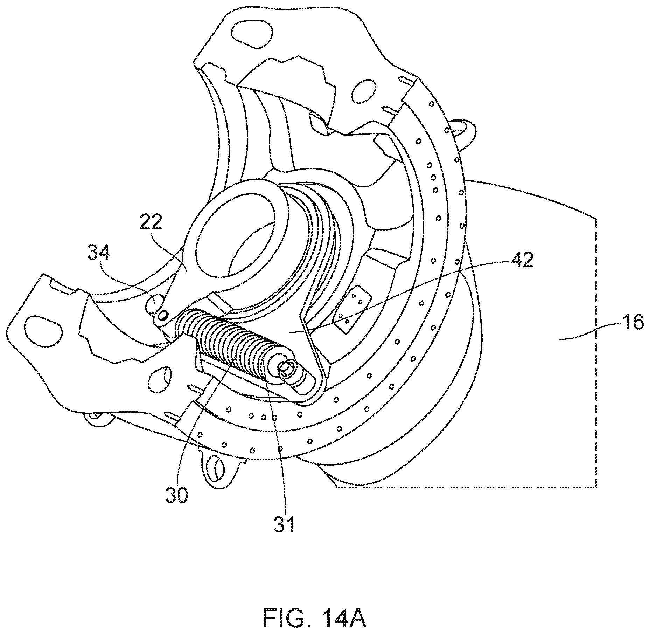

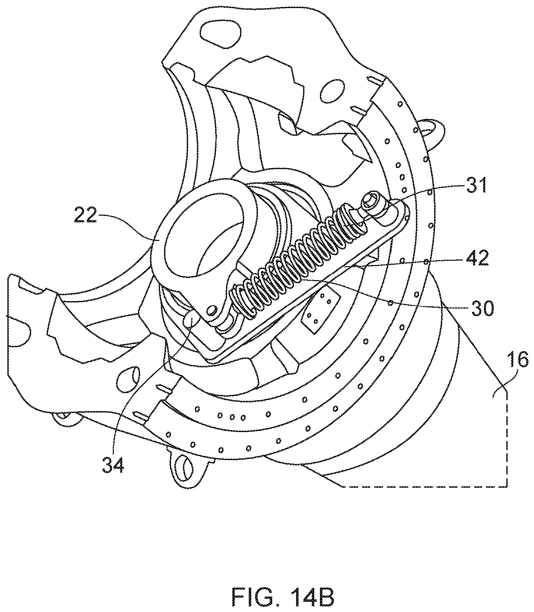

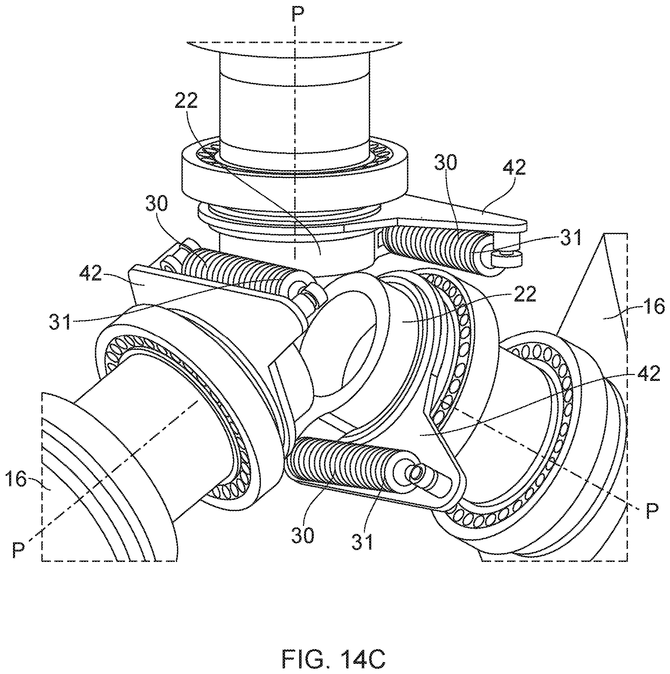

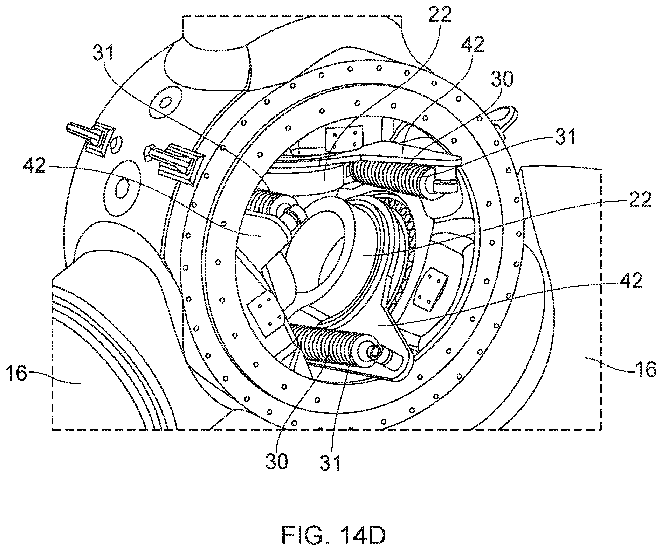

An alternative embodiment to facilitate feathering of the blades is shown in figures 14A to 14D.

In the arrangement of this embodiment, the adjustment plate 42 can pivot about the pitch axis P and is in fixed engagement with stop member and the second end of the resilient biasing means.

The angular position of the adjustment plate 42 is set by an actuation system (not shown).

In normal operation, the adjustment plate 42 is fixed and the system operates as described previously.

To move the blades to feather, the actuation system is controlled by the turbine controller and acts to rotate the adjustment plate 42, the stop member 34, and the second end of the resilient biasing means, which in turn rotate the lever 22 together with the blade 16 about the pitch axis P.

It is to be understood that the actuator, such as a linear actuator may be either electrical or hydraulic.

An adaptation of this arrangement would be required in order to allow spring preload adjustment. For example, the fixed end 31 of spring 30 would need to be mounted on a sliding system, such as, but not limited to, a leadscrew. An actuator would be required for each blade to control the position of the leadscrew.

**Advantages of the passive pitch system:**
- The passive pitch system reduces the ultimate and fatigue loads on the blades, rotor and supporting structures. This will significantly reduce the cost of the whole system's structural components, from blade to foundation. The reduction in load is achievable through the passive pitch rotor design, which enables the blades pitch angle to change very rapidly to flow velocity changes, smoothing out the power and load fluctuations.
- Increased reliability as not reliant on successful operation of motors, drives, controllers, gearboxes, brakes, encoders and load sensors, as required for conventional active pitch systems.
- It requires only very simply mechanical components for operation (springs, end stops i.e. stiffer springs). The conventional active systems require load sensors, encoders etc which are not required for the passive pitch system.

## Claims

1. A passive pitch system for a tidal turbine with a rated power, the passive pitch system comprising:
a rotor (10) having:
a) a rotor hub (12) for rotatable engagement with a mechanical power transmission system of a tidal turbine and rotatable about a rotor axis (R), the rotor hub (12) having a blade receiving portion (14) for engagement with a blade (16);
b) a blade (16) comprising:
(i) an elongate blade body having a first end and a second end opposing the first end, a blade inboard portion (18i) extending from the first end towards the second end, and a blade outboard portion (18o) extending from the second end toward the first end, wherein the elongate body defines a leading edge (11) extending between the first and second ends and a trailing edge (13) extending between the first and second ends and opposing the leading edge (11); and
(ii) a blade root portion (20) located at the first end of the blade (16) in fixed engagement with the elongate blade body and configured for rotatable engagement with the rotor blade receiving portion (14) about a pitch axis (P);
c) a lever (22) comprising a body having:
(i) a first engagement portion (24) for fixed engagement with the blade root portion (20);
(ii) a second engagement portion (26) opposing the first engagement portion for engagement with a resilient biasing means (30); and
(iii) a third engagement portion (28) for engagement with a stop member (34);
d) the stop member (34) in fixed engagement with the rotor hub (12), and
e) the resilient biasing means (30) having a first end in engagement with the second engagement portion (26) of the lever and a second end (31) opposing the first end, the second end (31) coupled to a position distal to the stop member (34), the resilient biasing means (30) having a predetermined preload selected in dependence upon the rated power of the tidal turbine to which the rotor hub (12) is engaged during use,
wherein, during use, when the hydrodynamic moment acting at the blade (16) about the pitch axis (P) is less than the moment applied to the blade (16) about the pitch axis (P) by the resilient biasing means (30), the resilient biasing means (30) biases the lever (22) into engagement with the stop member (34); and when the hydrodynamic moment acting at the blade (16) about the pitch axis (P) exceeds the moment applied to the blade (16) about the pitch axis (P) by the resilient biasing means (30), the blade (16) is rotatable about the pitch axis (P) to move the lever (22) in a direction away from the stop member (34).

2. A passive pitch system according to claim 1, wherein the second end (31) of the resilient biasing means (30) is in fixed engagement with the rotor hub (12).

3. A passive pitch system according to claim 1 or claim 2, wherein the blade inboard portion (18i) is offset with respect to the pitch axis (P) in a direction towards the trailing edge (13).

4. A passive pitch system according to claim 3, wherein the blade inboard portion (18i) is offset with respect to the pitch axis (P) in a direction towards the trailing edge (13) and away from the pitch axis (P) in the direction of tidal flow past the blade (16) during use.

5. A passive pitch system according to any preceding claim, wherein the blade outboard portion (18o) is offset with respect to the pitch axis (P) in a direction towards the trailing edge (13).

6. A passive pitch system according to claim 5, wherein the blade outboard portion (18o) is offset with respect to the pitch axis (P) in a direction towards the trailing edge (13) and away from the pitch axis (P) in the direction of tidal flow past the blade (16) during use.

7. A passive pitch system according to any preceding claim, further comprising a tidal turbine controller operable to adjust the speed of rotation of the rotor hub (12) in dependence upon the hydrodynamic moment acting at the rotor (10) about the rotor axis (R), the speed of rotation of the rotor hub (12) and the predetermined preload of the resilient biasing means (30), so that the hydrodynamic moment acting at the blade (16) about the pitch axis (P) equals the moment applied to the blade (16) about the pitch axis (P) by the resilient biasing means (30) at a pitch angle (β) corresponding to rated power of the tidal turbine.

8. A passive pitch system according to any preceding claim, wherein the passive pitch system further comprises a preload adjustment member (36) in fixed engagement with the second end (31) of the resilient biasing means (30), the preload adjustment member (36) being moveable relative to the rotor hub (12) and rotatable with the rotor hub (12), wherein the preload of the resilient biasing means (30) can be adjusted by moving the preload adjustment member (36) relative to the lever (22) to alter the distance between the second engagement portion (36) of the lever (22) and the second end (31) of the resilient biasing means (30).

9. A passive pitch system according to claim 8, wherein moving the preload adjustment member (36) in a direction away from the lever (22) to increase the distance between the lever (22) and second end (31) of the resilient biasing means (30) decreases the preload of the resilient biasing means (30); and moving the preload adjustment member (36) in a direction towards the lever (22) to decrease the distance between the lever (22) and the second end (31) of the resilient biasing means (30) increases the preload of the resilient biasing means (30).

10. A passive pitch system according to any preceding claim,
wherein the passive pitch system further comprises a wheel gear (38) located in fixed engagement with the blade root (20), wherein the wheel gear (38) is operable to control rotation of the blade (16) about the pitch axis (P) independently of the hydrodynamic moment acting at the blade (16) about the pitch axis (P).

11. A passive pitch system according to any one of claims 1 and claims 3 to 10 when dependent on claim 1, wherein the passive pitch system further comprises an adjustment plate (42) in fixed engagement with the lever (22), fixed stop and second end (31) of the resilient biasing means (30), wherein the adjustment plate (42) is operable to control rotation of the blade (16) about the pitch axis (P) independently of the hydrodynamic moment acting at the blade (16) about the pitch axis (P).

## Patentansprüche

1. Passives Pitch-System für eine Gezeitenturbine mit einer Nennleistung, wobei das passive Pitch-System Folgendes umfasst:
einen Rotor (10), der Folgendes aufweist:
a) eine Rotornabe (12) zum drehbaren Eingriff mit einem mechanischen Leistungsübertragungssystem einer Gezeitenturbine und drehbar um eine Rotorachse (R), wobei die Rotornabe (12) einen Schaufelaufnahmeabschnitt (14) zum Eingriff mit einer Schaufel (16) aufweist;
b) eine Schaufel (16), die Folgendes umfasst:
(i) einen länglichen Schaufelkörper, der ein erstes Ende und ein zweites Ende, das dem ersten Ende gegenüberliegt, einen Schaufelinnenbordabschnitt (18i), der sich von dem ersten Ende zu dem zweiten Ende hin erstreckt, und einem Schaufelaußenbordabschnitt (18o), der sich von dem zweiten Ende zu dem ersten Ende hin erstreckt, aufweist, wobei der längliche Körper eine Vorderkante (11), die sich zwischen dem ersten und dem zweiten Ende erstreckt, und eine Hinterkante (13) definiert, die sich zwischen dem ersten und dem zweiten Ende erstreckt und der Vorderkante (11) gegenüberliegt; und
(ii) einen Schaufelfußabschnitt (20), der sich an dem ersten Ende der Schaufel (16) in festem Eingriff mit dem länglichen Schaufelkörper befindet und zum drehbaren Eingriff mit dem Rotorschaufelaufnahmeabschnitt (14) um eine Pitch-Achse (P) konfiguriert ist;
c) einen Hebel (22), der einen Körper umfasst, der Folgendes aufweist:
(i) einen ersten Eingriffsabschnitt (24) zum festen Eingriff mit dem Schaufelfußabschnitt (20);
(ii) einen zweiten Eingriffsabschnitt (26), der dem ersten Eingriffsabschnitt gegenüberliegt, zum Eingriff mit einem elastischen Vorspannmittel (30); und
(iii) einen dritten Eingriffsabschnitt (28) zum Eingriff mit einem Anschlagelement (34);
d) das Anschlagelement (34) in festem Eingriff mit der Rotornabe (12), und
e) das elastische Vorspannmittel (30), das ein erstes Ende in Eingriff mit dem zweiten Eingriffsabschnitt (26) des Hebels und ein zweites Ende (31) aufweist, das dem ersten Ende gegenüberliegt, wobei das zweite Ende (31) an eine Position distal von dem Anschlagelement (34) gekoppelt ist, wobei das elastische Vorspannmittel (30) eine vorbestimmte Vorbelastung aufweist, die in Abhängigkeit von der Nennleistung der Gezeitenturbine ausgewählt ist, mit der die Rotornabe (12) während des Gebrauchs in Eingriff steht,
wobei während des Gebrauchs, wenn das hydrodynamische Moment, das auf die Schaufel (16) um die Pitch-Achse (P) wirkt, geringer als das Moment ist, das auf die Schaufel (16) um die Pitch-Achse (P) durch das elastische Vorspannmittel (30) aufgebracht wird, das elastische Vorspannmittel (30) den Hebel (22) in Eingriff mit dem Anschlagelement (34) vorspannt; und wenn das hydrodynamische Moment, das auf die Schaufel (16) um die Pitch-Achse (P) wirkt, das Moment übersteigt, das auf das Schaufel (16) um die Pitch-Achse (P) durch das elastische Vorspannmittel (30) aufgebracht wird, die Schaufel (16) um die Pitch-Achse (P) drehbar ist, um den Hebel (22) in eine Richtung weg von dem Anschlagelement (34) zu bewegen.

2. Passives Pitch-System nach Anspruch 1, wobei das zweite Ende (31) des elastischen Vorspannmittels (30) in festem Eingriff mit der Rotornabe (12) ist.

3. Passives Pitch-System nach Anspruch 1 oder Anspruch 2, wobei der Schaufelinnenbordabschnitt (18i) in Bezug auf die Pitch-Achse (P) in einer Richtung zu der Hinterkante (13) hin versetzt ist.

4. Passives Pitch-System nach Anspruch 3, wobei der Schaufelinnenbordabschnitt (18i), während des Gebrauchs, in Bezug auf die Pitch-Achse (P) in einer Richtung zu der Hinterkante (13) hin und weg von der Pitch-Achse (P) in der Richtung der Gezeitenströmung an der Schaufel (16) vorbei versetzt ist.

5. Passives Pitch-System nach einem vorhergehenden Anspruch, wobei der Schaufelaußenbordabschnitt (18o) in Bezug auf die Pitch-Achse (P) in einer Richtung zu der Hinterkante (13) hin versetzt ist.

6. Passives Pitch-System nach Anspruch 5, wobei der Schaufelaußenbordabschnitt (18o), während des Gebrauchs, in Bezug auf die Pitch-Achse (P) in einer Richtung zu der Hinterkante (13) hin und weg von der Pitch-Achse (P) in der Richtung der Gezeitenströmung an der Schaufel (16) vorbei versetzt ist.

7. Passives Pitch-System nach einem vorhergehenden Anspruch, ferner umfassend ein Gezeitenturbinensteuergerät, das betreibbar ist, um die Drehzahl der Rotornabe (12) in Abhängigkeit von dem hydrodynamischen Moment, das auf den Rotor (10) um die Rotorachse (R) wirkt, der Drehzahl der Rotornabe (12) und der vorbestimmten Vorbelastung des elastischen Vorspannmittels (30) einzustellen, sodass das hydrodynamische Moment, das auf die Schaufel (16) um die Pitch-Achse (P) wirkt, gleich dem Moment ist, das auf die Schaufel (16) um die Pitch-Achse (P) durch das elastische Vorspannmittel (30) bei einem Pitch-Winkel (β) aufgebracht wird, der der Nennleistung der Gezeitenturbine entspricht.

8. Passives Pitch-System nach einem vorhergehenden Anspruch, wobei das passive Pitch-System ferner ein Vorbelastungseinstellelement (36) in festem Eingriff mit dem zweiten Ende (31) des elastischen Vorspannmittels (30) umfasst, wobei das Vorbelastungseinstellelement (36) relativ zu der Rotornabe (12) beweglich und mit der Rotornabe (12) drehbar ist, wobei die Vorbelastung des elastischen Vorspannmittels (30) durch Bewegen des Vorbelastungseinstellelements (36) relativ zu dem Hebel (22) eingestellt werden kann, um den Abstand zwischen dem zweiten Eingriffsabschnitt (36) des Hebels (22) und dem zweiten Ende (31) des elastischen Vorspannmittels (30) zu ändern.

9. Passives Pitch-System nach Anspruch 8, wobei das Bewegen des Vorbelastungseinstellelements (36) in eine Richtung weg von dem Hebel (22), um den Abstand zwischen dem Hebel (22) und dem zweiten Ende (31) des elastischen Vorspannmittels (30) zu erhöhen, die Vorbelastung des elastischen Vorspannmittels (30) verringert; und das Bewegen des Vorbelastungseinstellelements (36) in eine Richtung zu dem Hebel (22) hin, um den Abstand zwischen dem Hebel (22) und dem zweiten Ende (31) des elastischen Vorspannmittels (30) zu verringern, die Vorbelastung des elastischen Vorspannmittels (30) erhöht.

10. Passives Pitch-System nach einem vorhergehenden Anspruch, wobei das passive Pitch-System ferner ein Zahnrad (38) umfasst, das sich in festem Eingriff mit dem Schaufelfuß (20) befindet, wobei das Zahnrad (38) betreibbar ist, um die Drehung der Schaufel (16) um die Pitch-Achse (P) unabhängig von dem hydrodynamischen Moment zu steuern, das auf die Schaufel (16) um die Pitch-Achse (P) wirkt.

11. Passives Pitch-System nach einem der Ansprüche 1 und Ansprüche 3 bis 10, wenn abhängig von Anspruch 1, wobei das passive Pitch-System ferner eine Einstellplatte (42) in festem Eingriff mit dem Hebel (22), dem festen Anschlag und dem zweiten Ende (31) des elastischen Vorspannmittels (30) umfasst, wobei die Einstellplatte (42) betreibbar ist, um die Drehung der Schaufel (16) um die Pitch-Achse (P) unabhängig von dem hydrodynamischen Moment zu steuern, das auf die Schaufel (16) um die Pitch-Achse (P) wirkt.

## Revendications

1. Système de pas passif pour une turbine marémotrice avec une puissance nominale, le système de pas passif comprenant :
un rotor (10) ayant :
a) un moyeu de rotor (12) destiné venir en prise rotative avec un système de transmission de puissance mécanique d'une turbine marémotrice et pouvant tourner autour d'un axe de rotor (R), le moyeu de rotor (12) ayant une partie de réception de pale (14) destinée à venir en prise avec une pale (16) ;
b) une pale (16) comprenant :
(i) un corps de pale allongé ayant une première extrémité et une seconde extrémité opposée à la première extrémité, une partie intérieure de pale (18i) s'étendant de la première extrémité vers la seconde extrémité, et une partie extérieure de pale (18o) s'étendant de la seconde extrémité vers la première extrémité, dans lequel le corps allongé définit un bord d'attaque (11) s'étendant entre les première et seconde extrémités et un bord de fuite (13) s'étendant entre les première et seconde extrémités et opposé au bord d'attaque (11) ; et
(ii) une partie de pied de pale (20) située au niveau de la première extrémité de la pale (16) en prise fixe avec le corps de pale allongé et conçue pour venir en prise rotative avec la partie de réception de pale de rotor (14) autour d'un axe de pas (P) ;
c) un levier (22) comprenant un corps ayant :
(i) une première partie de prise (24) destinée à venir en prise fixe avec la partie de pied de pale (20) ;
(ii) une deuxième partie de prise (26) opposée à la première partie de prise et destinée à venir en prise avec un moyen de sollicitation élastique (30) ; et
(iii) une troisième partie de prise (28) destinée à venir en prise avec un élément de butée (34) ;
d) l'élément de butée (34) étant en prise fixe avec le moyeu de rotor (12), et
e) le moyen de sollicitation élastique (30) ayant une première extrémité en prise avec la deuxième partie de prise (26) du levier et une seconde extrémité (31) opposée à la première extrémité, la seconde extrémité (31) étant couplée à une position distale par rapport à l'élément de butée (34), le moyen de sollicitation élastique (30) ayant une précharge prédéterminée sélectionnée en fonction de la puissance nominale de la turbine marémotrice avec laquelle le moyeu de rotor (12) est en prise pendant l'utilisation,
dans lequel, pendant l'utilisation, lorsque le moment hydrodynamique agissant au niveau de la pale (16) autour de l'axe de pas (P) est inférieur au moment appliqué à la pale (16) autour de l'axe de pas (P) par le moyen de sollicitation élastique (30), le moyen de sollicitation élastique (30) sollicite le levier (22) en prise avec l'élément de butée (34) ; et lorsque le moment hydrodynamique agissant au niveau de la pale (16) autour de l'axe de pas (P) dépasse le moment appliqué à la pale (16) autour de l'axe de pas (P) par le moyen de sollicitation élastique (30), la pale (16) peut tourner autour de l'axe de pas (P) pour déplacer le levier (22) dans une direction s'éloignant de l'élément de butée (34).

2. Système de pas passif selon la revendication 1, dans lequel la seconde extrémité (31) du moyen de sollicitation élastique (30) est en prise fixe avec le moyeu de rotor (12).

3. Système de pas passif selon la revendication 1 ou la revendication 2, dans lequel la partie intérieure de pale (18i) est décalée par rapport à l'axe de pas (P) dans une direction vers le bord de fuite (13).

4. Système de pas passif selon la revendication 3, dans lequel la partie intérieure de pale (18i) est décalée par rapport à l'axe de pas (P) dans une direction vers le bord de fuite (13) et s'éloignant de l'axe de pas (P) dans la direction de l'écoulement de marée au-delà de la pale (16) pendant l'utilisation.

5. Système de pas passif selon l'une quelconque des revendications précédentes, dans lequel la partie extérieure de pale (18o) est décalée par rapport à l'axe de pas (P) dans une direction vers le bord de fuite (13).

6. Système de pas passif selon la revendication 5, dans lequel la partie extérieure de pale (18o) est décalée par rapport à l'axe de pas (P) dans une direction vers le bord de fuite (13) et s'éloignant de l'axe de pas (P) dans la direction de l'écoulement de marée au-delà de la pale (16) pendant l'utilisation.

7. Système de pas passif selon l'une quelconque des revendications précédentes, comprenant en outre un contrôleur de turbine marémotrice pouvant fonctionner pour ajuster la vitesse de rotation du moyeu de rotor (12) en fonction du moment hydrodynamique agissant au niveau du rotor (10) autour de l'axe de rotor (R), de la vitesse de rotation du moyeu de rotor (12) et de la précharge prédéterminée du moyen de sollicitation élastique (30), de sorte que le moment hydrodynamique agissant au niveau de la pale (16) autour de l'axe de pas (P) soit égal au moment appliqué à la pale (16) autour de l'axe de pas (P) par le moyen de sollicitation élastique (30) à un angle de pas (β) correspondant à la puissance nominale de la turbine marémotrice.

8. Système de pas passif selon l'une quelconque des revendications précédentes, dans lequel le système de pas passif comprend en outre un élément de réglage de précharge (36) en prise fixe avec la seconde extrémité (31) du moyen de sollicitation élastique (30), l'élément de réglage de précharge (36) étant mobile par rapport au moyeu de rotor (12) et pouvant tourner avec le moyeu de rotor (12), dans lequel la précharge du moyen de sollicitation élastique (30) peut être réglée en déplaçant l'élément de réglage de précharge (36) par rapport au levier (22) pour modifier la distance entre la deuxième partie de prise (36) du levier (22) et la seconde extrémité (31) du moyen de sollicitation élastique (30).

9. Système de pas passif selon la revendication 8, dans lequel le déplacement de l'élément de réglage de précharge (36) dans une direction s'éloignant du levier (22) pour augmenter la distance entre le levier (22) et la seconde extrémité (31) du moyen de sollicitation élastique (30) diminue la précharge du moyen de sollicitation élastique (30) ; et le déplacement de l'élément de réglage de précharge (36) dans une direction vers le levier (22) pour diminuer la distance entre le levier (22) et la seconde extrémité (31) du moyen de sollicitation élastique (30) augmente la précharge du moyen de sollicitation élastique (30).

10. Système de pas passif selon l'une quelconque des revendications précédentes, dans lequel le système de pas passif comprend en outre un engrenage à roue (38) situé en prise fixe avec le pied de pale (20), dans lequel l'engrenage à roue (38) peut fonctionner pour commander la rotation de la pale (16) autour de l'axe de pas (P) indépendamment du moment hydrodynamique agissant au niveau de la pale (16) autour de l'axe de pas (P).

11. Système de pas passif selon l'une quelconque des revendications 1 et des revendications 3 à 10 lorsqu'elles dépendent de la revendication 1, dans lequel le système de pas passif comprend en outre une plaque de réglage (42) en prise fixe avec le levier (22), la butée fixe et la seconde extrémité (31) du moyen de sollicitation élastique (30), dans lequel la plaque de réglage (42) peut fonctionner pour commander la rotation de la pale (16) autour de l'axe de pas (P) indépendamment du moment hydrodynamique agissant au niveau de la pale (16) autour de l'axe de pas (P).
